Europäisches Patentamt

European Patent Office

Office européen des brevets

(19)

(11) Veröffentlichungsnummer: **0 296 151 B1**

# (12) EUROPÄISCHE PATENTSCHRIFT

(45) Veröffentlichungstag der Patentschrift:
15.05.91 Patentblatt 91/20

(21) Anmeldenummer: 87900138.6

(22) Anmeldetag: 20.12.86

(86) Internationale Anmeldenummer:
PCT/EP86/00773

(87) Internationale Veröffentlichungsnummer:
WO 87/03834 02.07.87 Gazette 87/14

(51) Int. Cl.⁵: **B23K 37/02, B23K 37/04,**
**B23Q 1/00, B62D 65/00**

(54) VORRICHTUNG MIT EINEM HUBGESTELL ZUM BEARBEITEN VON WERKSTÜCKEN.

(30) Priorität: 21.12.85 DE 3545538

(43) Veröffentlichungstag der Anmeldung:
28.12.88 Patentblatt 88/52

(45) Bekanntmachung des Hinweises auf die
Patenterteilung:
15.05.91 Patentblatt 91/20

(84) Benannte Vertragsstaaten:
DE FR GB IT

(56) Entgegenhaltungen:
EP-A- 0 065 834
DE-A- 3 341 169
US-A- 4 479 576

(73) Patentinhaber: AUDI AG
Auto-Union-Strasse 1 Postfach 220
W-8070 Ingolstadt (DE)

(72) Erfinder: MÜLLER, Karl-Heinz
Schillerstr. 66
W-8070 Ingolstadt (DE)
Erfinder: RIEDL, Volker
St. Wendelin 5
W-8074 Gaimersheim (DE)
Erfinder: ARBESMEIER, Bernhard
Ottostr. 3
W-8426 Altmannstein/Hagenhill (DE)

EP 0 296 151 B1

## Beschreibung

Die Erfindung bezieht sich auf eine Vorrichtung zum Bearbeiten von Werkstücken, wobei ein das Werkstück aufnehmendes Unterwerkzeug durch ein Hubgestell nach oben gegen ein Oberwerkzeug bewegbar ist und in dieser Position die Bearbeitung des Werkstückes erfolgt.

Gattungsgemäße Vorrichtungen werden meist als Vielpunktschweißanlagen eingesetzt. Die bekannten Vorrichtungen weisen ein Gestell auf, welches meist vier senkrechte Säulen umfaßt. Zwischen den Säulen nimmt der untere Abschnitt des Gestells eine Hubeinrichtung auf. Der Hubtisch dieser Hubeinrichtung trägt die Unterwerkzeuge. Bei abgesenktem Hubtisch lassen sich die Werkstücke auf die Unterwerkzeuge auflegen ; beim Anheben des Hubtisches wird das Werkstück den Oberwerkzeugen zur Bearbeitung zugeführt. Die Oberwerkzeuge hängen an einer Kopfplatte, welche auf den Säulen aufliegt. Sollen die Werkzeuge ausgewechselt werden, dann geschieht dies meist in der Weise, daß die Unterwerkzeuge mit den Oberwerkzeugen verbunden werden (beispielsweise durch Montagesäulen) und der komplette Werkzeugsatz mittels Kran aus dem Gestell herausgehoben wird. Ein solcher Werkzeugwechsel ist äußerst zeitaufwendig, da viele Teile gelöst, wieder befestigt und auch im Bezug auf eine neue Art von Werkstücken eingerichtet werden müssen. Da die Säulen des Gestells vom Boden bis zur Kopfplatte reichen, muß der Werkzeugsatz beim Wechseln mit seiner Unterkante über die Säulen bewegt werden, wodurch eine ausreichende Raumhöhe notwendig ist.

Der Erfindung liegt die Aufgabe zugrunde, eine gattungsgemäße Vorrichtung in Hinblick auf eine verbesserte Wirtschaftlichkeit bei gleichbleibender oder verbesserter Arbeitsqualität weiterzubilden.

Die Aufgabe wird durch die Merkmale des Patentanspruchs 1 gelöst.

Durch die Erfindung wird eine Vorrichtung vorgeschlagen, deren besonderes Merkmal eine horizontale Unterteilung in ein Werkzeuggestell und in ein Hubgestell darstellt. Des Werkzeuggestell umfaßt senkrechte Säulen, eine diese verbindende Kopfplatte und eine an den Säulen lösbar befestigte Grundplatte. Dieses Werkzeuggestell soll leicht lösbar auf das Hubgestell aufgesetzt werden. Im aufgesetzten Zustand wird die Verbindung zwischen Grundplatte und Säulen gelöst und eine Verbindung zwischen Grundplatte und dem Hubtisch des Hubgestells hergestellt. Dadurch werden zwei Baugruppen, nämlich das Hubgestell und das Werkzeuggestell geschaffen, die schnell miteinander verbunden und auch wieder getrennt werden können und welche ihren unterschiedlichen Aufgaben optimal gerecht werden können. Insbesondere kann für die unterschiedlichen zu bearbeitenden Werkstücke je ein Werkzeuggestell bereitgestellt werden. Dabei ist es möglich, eine externe Einarbeitung vorzunehmen, so daß dadurch der Produktionsablauf nicht behindert wird. Durch die erfindungsgemäße Vorrichtung wird außerdem eine Schnellwechselmöglichkeit geschaffen, die gegenüber bekannten Vorrichtungen nur einen Bruchteil an Umrüstzeit benötigt. Es wird dadurch eine Möglichkeit geschaffen, die Vorrichtung nicht nur bei Abschluß einer Serienfertigung umzubauen, sondern während der Produktion den gestellten Anforderungen, z.B. für Fluß- und Stoßfertigung – entsprechen zu können.

Von Vorteil ist auch, daß ohne Schwierigkeiten das Werkzeuggestell nach Serienende – etwa für eine Ersatzteilfertigung – weiter verwendbar ist. Das Werkzeuggestell kann zu diesem Zweck aufbewahrt oder zu einer anderen Produkitonsstätte befördert werden, wo es auf ein gleiches Hubgestell aufgesetzt wird. Zum Aufbau einer neuen Anlage ist die vollständige Wiederverwendbarkeit des Hubgestells gegeben. Soll das Werkzeuggestell nicht für einen späteren Zweck aufbewahrt werden, dann kann auch dieses für einen anderen Zweck weiterverwendet werden, indem die am Werkzeuggestell festgelegten Werkzeuge umgebaut oder ausgetauscht werden. Zusammenschauend kann festgestellt werden, daß durch den Erfindungsgegenstand eine Vorrichtung (insbesondere zum Vielpunktschweißen) im Baukastensystem geschaffen wird, bei dem die einzelnen Komponenten an unterschiedlichen Stellen eingerichtet oder verwendet werden ; beim Zusammensetzen mit unterschiedlichen Komponenten (Werkzeuggestellen) eine voll funktionsfähige neue Vorrichtung geschaffen wird. Die Hubgestelle, da sie keine werkzeug- oder werkstückspezifische Bauteile enthalten, können ohne jegliche Umrüstung universell eingesetzt werden. Die Werkzeuggestelle sind die werkstückspezifischen Bauteile. Sie können in ausreichender Anzahl für jedes Werkstück bereitgehalten werden und dann, wenn ein Werkstück entgültig nicht mehr produziert werden soll, ohne Probleme auf ein neues Werkstück umgerüstet werden. Dabei müssen keine Teile des eigentlichen Werkzeuggestells ersetzt werden.

Beim Aufsetzen eines Werkzeuggestelles auf das Hubgestell ist zunächst die das Unterwerkzeug tragende Grundplatte des Werkzeuggestelles an diesem fixiert. Wird das Werkzeuggestell mit seinen Säulen auf das Hubgestell aufgesetzt und befestigt, erfolgt anschließend die Festlegung der Grundplatte am Hubtisch und das Lösen der Verbindung der Grundplatte am Werkzeuggestell. Damit wird eine auf- und abbewegbare Einheit geschaffen, die sich innerhalb der nunmehr durchgehenden Säulen vertikal bewegen kann. Es wird also eine gut zugängliche Vorrichtung geschaffen, die im Anschlußbereich des Werkzeuggestelles an das Hubgestell trotz der Trennmöglichkeit keine zusätzlichen Verbindungselemente zwischen den Säulen benötigt.

Besonders vorteilhaft ist, wenn am Werkzeuggestell eine Fördervorrichtung angebracht ist, durch welche das Werkstück in das Werkzeuggestell einführbar und/oder herausbeweg bar ist. Die Fördereinrichtung kann bis auf die teilberühren den Förderarme standardisiert und so in jedem Werkzeuggestell eingesetzt werden. Der Förderweg kann über Schaltnocken universell einstellbar sein. Zweckmäßig erfolgt der Antrieb über einen polumschaltbaren Getriebemotor, durch den eine hohe Positioniergenauigkeit gewährleistet ist. Auch durch diese Maßnahme ist eine optimale Einarbeitung außerhalb der Produktion unter Betriebsbedingungen sowie eine schnelle Umstellung möglich.

Um einen schnellen Wechsel der Werkzeuggestelle ohne Zuhilfenahme von Zusatzgeräten wie Kran oder Gabelstapler mit ihrem hohen Platzbedarf einsetzen zu müssen, ist es sehr vorteilhaft, wenn sich an zwei Seiten des Hubgestells Abstelleinrichtungen für gerade nicht benötigte Werkzeuggestelle anschließen. Mit einer solchen Ergänzung ist es möglich, schnell zwischen zwei Werkzeuggestellen zu wechsen und damit ohne großen Zeitverlust auf ein anderes Werkstück umzustellen.

Wenn jede Abstelleinrichtung eine Verschiebeeinheit aufweist, durch die die Werkzeuggestelle von dem Hubgestell auf der Abstelleinrichtung und umgekehrt bewegbar sind, läßt sich der Wechselvorgang der Werkzeuggestelle durch nur eine Person bewerkstelligen oder gar automatisieren. Der dadurch bedingte Zeitvorteil erhöht wesentlich die Produktivität und wird besonders dann deutlich, wenn man die erfindungsgemäße Vorrichtung mit bekannten Vorrichtungen vergleicht, bei denen in zeitraubender Weise Montage-, Einstell- und Transportarbeiten durhgeführt werden müssen. Diese nehmen er fahrungsgemäß soviel Zeit in Anspruch, daß eine Umrüstung nur während längerer Produktionsstillstände durchgeführt werden können.

Zweckäßig ist, wenn die Abstelleinrichtungen an ihrer Oberseite zum leichten Verschieben gehärtete Leisten, Rollen oder Kugeln tragen und eine Arretiervorrichtung für das abgestellte Werkzeuggestell aufweisen. Die durch die gehärteten Leisten, Rollen bzw. Kugeln bedingte leichte Verschiebbarkeit erfordert nur geringe Antriebskräfte und damit wenig Energie und Bauaufwand. Die leichte Verschiebbarkeit bedingt andererseits eine Arretiervorrichtung, die jedoch einfach durch mechanisches oder selbsttätiges Abstecken erfolgen kann.

Vorteilhaft wird für den Hubtisch ein Kurbeltrieb eingesetzt, durch den der Hubtisch anhebbar und absenkbar ist. Der Kurbeltrieb, welcher bevorzugt eine Bewegung von 180° während der Hubbewegung bzw. beim Absenken ausführt, ermöglicht gegenüber den für Hubtische bisher bekannten Luftzylindern, Scheren usw. günstige Kraftverhältnisse und genaue Einstellmöglichkeiten.

Bevorzugt wird der Kurbeltrieb von einer Motor-Getriebe-Einheit angetrieben, wobei von dem Getriebe Wellenabschnitte herausgeführt sind, welche erste Kurbelschwingen aufweisen und wobei an diesen angebrachte erste Kurbelzapfen mit dem Hubtisch verbundene Stützen aufnehmen.

Die Ansprüche 8 bis 10 haben vorteilhafte Weiterbildungen des Kurbeltriebs zum Gegenstand, durch welche günstige Kraftverhältnisse bei geringem Bauaufwand realisierbar sind. Durch den 90°-Versatz der zweiten zur dritten Kurbelschwinge wird ausgeschlossen, daß ungünstige Kraftspitzen in den Totpunkten auftreten.

Zur Erzielung eines großen Schwenkwinkels der Kurbelschwingen sind zumindest die beiden nicht direkt angetriebenen Wellenabschnitte jeweils unterbrochen und einseitig gelagert, derart daß ein Übertragungsglied ungehindert dazwischen hindurchtreten kann. Für den gleichen Zweck kann ein Teil oder alle Übertragungsglieder und/oder die am Hubtisch angreifenden Stützen gekröpft ausgebildet sein.

Im Versuch hat es sich als günstig erwiesen, wenn jeder der beiden angetriebenen Wellenabschnitte in zwei Lagern aufgenommen ist, wenn zwischen den Lagern die Kurbelschwigen angeordnet sind und wenn der Wellenabschnitt zwischen der Motor-Getriebe-Einheit und dem anschließenden Lager über Flansche trennbar ausgeführt ist. Über die Flansche läßt sich die Motor-Getriebe-Einheit für Wartung oder Reparatur ohne Probleme aus dem Hubgestell herausziehen.

Für den Motor der Motor-Getriebe-Einheit wird vorteilhaft ein Gleichstrommotor eingesetzt, welcher über ein an einem Wellenabschnitt aufgesetztes Nockenschaltwerk ansteuerbar ist. Über einen Gleichstrommotor läßt sich in besonders einfacher Weise die Hubkennlinie verändern. Neben den dadurch möglichen Zwischenstellungen können auch unterschiedliche Geschwindigkeiten gefahren werden.

Gemäß einer besonders vorteilhaften Weiterbildung der Erfindung kann der Hubtisch an Säulen des Hubgestells geführt sein und mit Druckzylindern zusammmpnwirken, welche das Gewicht des Hubtisches unterstützen.

Dadurch ist es möglich, daß der Antrieb für den Hubtisch eine geringere Leistung erbringen muß, als an sich zum Anheben des Hubtisches erforderlich ist.

Zweckmäßig stehen die Druckzylinder mit einem Druckspeicher in Verbindung, derart, daß beim Absenken des Hubtisches das Druckmedium in den Druckspeicher gelangt und beim Anheben des Hubtisches das Druckmedium über die Druckzylinder unterstützend auf die Hubbewegung einwirkt. Das Volumen des Druckspeichers in Relation zum Volumen des verdrängten Druckmediums kann so gewählt werden, daß während der Hubbewegung nur geringe Druckunterschiede entstehen.

Von Vorteil ist, wenn als Druckmedium Hydraulikflüssigkeit dient, wenn ein Hydraulikaggregat zum Aufbau und zur Aufrechterhaltung des Druckmediums vorgesehen ist und wenn das System Einrichtungen zum Anpassen des Druckniveaus an verschiedene Gewichtsbelastungen umfaßt. Der Einsatz von Hydraulikflüssigkeit für das Druckmedium gewährleistet eine weitestgehende Wartungsfreiheit, da eine Selbstschmierung vorliegt. Gegenüber Luft als Druckmedium sind größere Drücke möglich ; dadurch die Anlage insgesamt platzsparender. Insgesamt ist auch ein verbesserter Wirkungsgrad festzustellen, da Hydraulikflüssigkeit im Gegensatz zu Luft mit geringeren Druckabfällen arbeitet. Günstig ist es, wenn das Hydraulikaggregat elektrisch angetrieben wird und sich am Hubgestell befindet. Durch den E-Antrieb ist nur eine Energieart für das Hubgestell erforderlich ; die Anordnung des Hydraulikaggregates am Hubgestell ermöglicht eine kompakte, alle notwendigen Baugruppen umfassende Einheit.

Je nach dem welches Werkzeuggestell auf das Hubgestell aufgesetzt wird, kann durch die verschiedenen Gewichte der von dem Hubtisch zu tragenden Unterwerkzeuge eine Druckanpassung sinnvoll sein, um mit möglichst wenig Antriebsenergie zu arbeiten, Diese Druckanpassung kann in an sich bekannter Weise mittels Ventilen, Druckschaltern oder sonstigen Stelleinrichtungen erfolgen, die von Hand einstellbar sind oder selbsttätig von einem bestimmten Signal gesteuert den jeweils erforderlichen Druck einstellen. Gleichsam sind an sich bekannte Maßnahmen vorgesehen, welche bei einem Druckabfall vorbestimmter Größe ein selbsttätiges Anlaufen des Hydraulikaggregates und dessen Abschalten bewirken. Eine Inbetriebnahme des Hydraulikaggregates ist auch dann erforderlich, wenn nach Beendigung der Produktion der Druck abgelassen wird und die Vorrichtung – z.B. am nächsten Tag – wieder ihren Betrieb aufnehmen soll.

Zum genauen Fixieren des Werkzeuggestells ist das Hubgestell zweckmäßig mit nach oben vorstehenden Zentrierbolzen zum Zusammenwirken mit den Säulen des Werkzeuggestells versehen. Durch die Zentrierbolzen wird stets eine genaue und gleichbleibende Zuordnung des Werkzeuggestells relativ zum Hubgestell erreicht. Andererseits ist die Grundplatte des Werkzeuggestells zunächst am Werkzeuggestell ebenfalls in einer genau festgelegten Position gehalten. Erst wenn das Werkzeuggestell über die Zentrierbolzen mit dem Hubgestell verbunden ist, erfolgt die Verbindung des Hubtisches mit der Grundplatte, so daß insgesamt eine sehr genaue Zuordnung der Teile gegeben ist.

Die Ansprüche 19 und 28 haben die Festlegung der Grundplatte an den Säulen des Werkzeuggestells zum Gegenstand. Durch die in diesen Ansprüchen gekennzeichneten Merkmale soll sichergestellt sein, daß die Werkzeuggestelle, wenn sie von den Abstelleinrichtungen über das Hubgestell geschoben werden sollen, dabei über die vom Hubgestell nach oben vorsteh enden Zentrierbolzen hinweggleiten können. Außerdem wird durch die Merkmale dieser Ansprüche erreicht, daß die Verbindung der Grundplatte mit dem Werkzeuggestell ohne großen Kraftaufwand von Hand gelöst und wieder sichergestellt werden kann.

Vorteilhaft ist, wenn die in den Ansprüchen 19 und 20 angesprochenen Zapfen und Hülsen in der oberen Stellung des Hubtisches eine Zentrierung bilden. Diese Zentrierung wird bei jeder Hubbewegung bewirkt, nämlich dann, wenn sich der Hubtisch in der oberen Stellung befindet. Genau in dieser Stellung ist die Zentrierung besonders wichtig, da dadurch eine ganz genaue Zuordnung der die Unterwerkzeuge tragenden Grundplatte des Werkzeuggestells zum eigentlichen Werkzeuggestell, welches die Oberwerkzeuge trägt, erreicht wird. Die Zentrierung stellt also bei jeder Hubbewegung eine auf z.B. 1/10 mm genaue Zuordnung der Unterwerkzeuge zu den Oberwerkzeugen sicher. Sind die Werkzeuge beispielsweise Schweißwerkzeuge, dann stellt sich durch die gleichbleibende Position der Schweißeinheiten eine gute Schweißpunktqualität und hohe Standzeiten der Elektroden ein. Auch wird bei geringem Einzelteilstandard die geforderte Schweißgruppenqualität erreicht. Die genaue Abstimmung ist es unter anderem auch, daß eine optimale Einarbeitung außerhalb der Produktion genau unter Betriebsbedingungen möglich ist.

Ein Ausführungsbeispiel einer erfindungsgemäßen Vorrichtung ist in der Zeichnung dargestellt. Es zeigen

Fig. 1 die Vorrichtung in Vorderansicht mit sich seitlich anschließenden Abstelleinrichtungen für Werkzeuggestelle,

Fig. 2 die Vorrichtung aus Fig. 1 in Seitenansicht, jedoch ohne die Abstelleinrichtungen,

Fig. 3 den Hubtisch der Vorrichtung aus Fig. 1 in perspektifischer Darstellung,

Fig. 4a die Einzelheit Z aus Fig. 1, wenn ein Werkzeuggestell auf den Hubtisch des Hubgestells aufgeschoben ist,

Fig. 4b die Einzelheit Z in einer Stellung, bei der der Hubtisch abgesenkt und die Säulen des Werkzeuggestells auf dem Hubgestell aufsitzen,

Fig. 4c die Einheit Z in ein er Stellung bei der nunmehr der Hubtisch etwas angehoben ist, so daß eine Verriegelung zwischen der Grundplatte des Werkzeuggestelles und der Säule des Werkzeuggestells entfernt werden kann und

Fig. 5 die Fixierung der Grundplatte an ein er Säule des Werkzeuggestells gemäß einer der Figuren 4a bis 4c detailliert in Seitenansicht und im Schnitt.

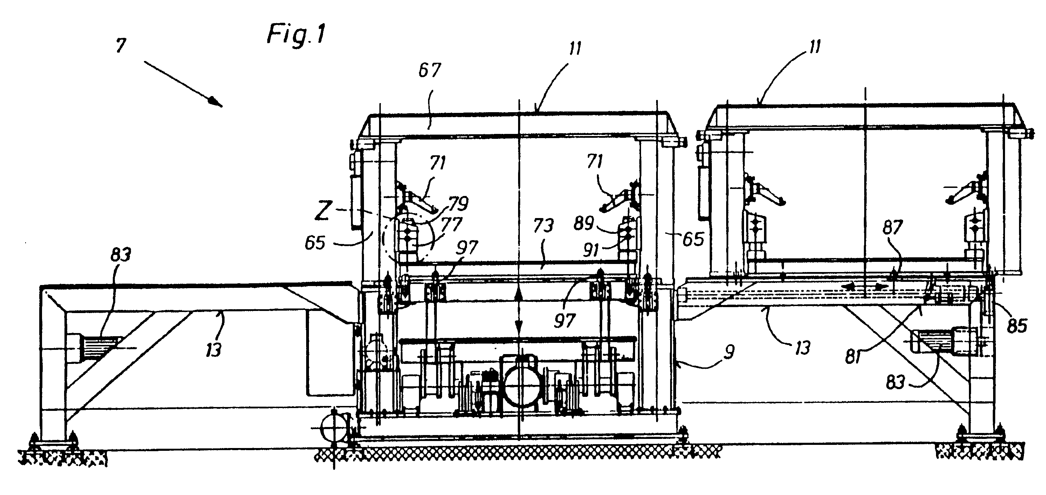

Eine in Fig. 1 dargestellte Vorrichtung 7 zum Bearbeiten von Werkstücken im Vielpunktschweißverfahren besteht aus einem Hubgestell 9 und einem darauf aufgesetztem Werkzeuggestell 11. Zu beiden Seiten des Hubgestells 9 schließen sich Abstelleinrichtungen 13 zur Aufnahme je eines Werkzeuggestells 11 an.

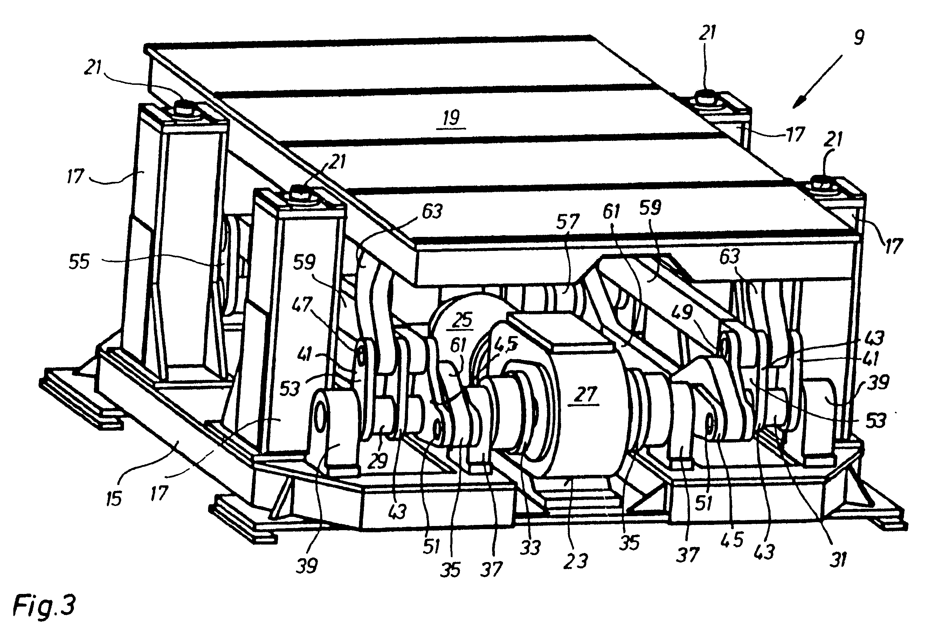

Zunächst wird das Hubgestell anhand von Fig. 3, welche das Hubgestell als Einzelteil in perspektivischer Darstellung wiedergibt, beschrieben. Auf einer Bodenplatte 15 des Hubgestells 9 sind vier Säulen 17 aufgesetzt, welche einen Hubtisch 19 höhenverschiebbar führen (nicht dargestellt). Jede Säule 17 ist an ihrem oberen Ende mit einem Zentrierbolzen 21 versehen, welcher der Zentrierung des aufzusetzenden Werkzeuggestelles 11 dient.

Als Antrieb für das Hubgestell 9 ist eine zentrale Motor-Getriebe-Einheit 23 vorgesehen. Der Motor der Motor-Getriebe-Einheit 23 ist durch einen Gleichstrommotor 25 gebildet, wodurch in einfacher Weise die Hubkennlinie veränderbar ist.

Von dem Getriebe 27 der Motorgetriebeeinheit 23 sind zwei Wellenabschnitte 29 und 31 herausgeführt, welche über Flansche 33 und 35 trennbar ausgeführt sind, so daß im Reparaturfall die Motor-Getriebe-Einheit 23 ohne Probleme ausgewechselt werden kann. Die Wellenabschnitte 29 und 31 sind in inneren Lagerböcken 37 und äußeren Lagerböcken 39 aufgenommen. In dem Bereich zwischen den zugeordneten Lagerböcken 37 und 39 ist jeder Wellenabschnitt mit einer ersten Kurbelschwinge 41, einer zweiten Kurbelschwinge 43 und einer dritten Kurbelschwinge 45 versehen. Jede der Kurbelschwingen 41, 43 und 45 nimmt einen ersten bzw. zweiten bzw. dritten Kurbelbolzen auf, welche mit den Ziffern 47, 49, 51 bezeichnet sind. Jede Kurbelschwinge 41, 43, 45 ist durch zwei Schenkel 53 gebildet, welche über den zugeordneten Kurbelbolzen miteinander verbunden sind. Dabei benutzen einander benachbarte Kurbelschwingen stets einen Schenkel 53 gemeinsam.

Neben den angetriebenen Wellenabschnitten 29 und 31 umfaßt das Hubgestell 9 zwei weitere, jedoch nicht angetriebene Wellenabschnitte, welche in Fig. 3 größtenteils verdeckt sind und welche die Bezugszeichen 55 und 57 tragen. Auf diesen Wellenabschnitten 55 und 57 sind jeweils in gleicher Anordnung wie auf den angetriebenen Wellenabschnitten 29 und 31 drei Kurbelschwingen (nicht bezeichnet) angeordnet. Zur Übertragung der Kräfte von den angetriebenen auf die nicht angetriebenen Wellenabschnitte sind zwischen den zweiten Kurbelschwingen der zugeordneten Wellenabschnitte erste Übertragungsglieder 59 und zwischen den dritten Kurbelschwingen der zugeordneten Wellenabschnitte zweite Übertragungsglieder 61 angeordnet. Zur Erzielung einer stets günstigen Kraftübertragung schließen die zweiten Kurbelschwingen zu den dritten Kurbelschwingen jeweils einen Winkel von 90° ein.

Um dem Kurbeltrieb eine Drehung um 180° zu ermöglichen, sind die indirekt angetriebenen Wellenabschnitte 55 und 57 jeweils unterbrochen, derart, daß die ersten Übertragungsglieder 59 ungehindert dazwischen hindurchtreten können. Dieses Detail ist aus Fig. 1 zu ersehen. Alle ersten Kurbelschwingen nehmen über ihren Kurbelbolzen je eine Stütze 63, welche gelenkig am Hubtisch 19 befestigt ist. Über die Stützen 63 wird die Hubbewegung des Kurbeltriebs auf den Hubtisch 19 übertragen. Um eine Kurbeldrehung von 180° zu realisieren, sind die Stützen – genauso wie die ersten und zweiten Übertragungsglieder 59 bzw. 61 – gekröpft ausgebildet, wobei die Kröpfung stets um den entsprechenden Wellenabschnitt in der abgesenkten Stellung herumführt.

Damit über den Motor 25 nicht die gesamte Leistung zum Anheben des Hubtisches 19 und der darauf später zu befestigenden Unterwerkzeuge aufgebracht werden muß, wirkt der Hubtisch 19 über seine Führungen in den Säulen 17 mit Druckzylindern (in der Zeichnung nicht erkennbar) zusammen. Diese mit Hydraulikflüssigkeit gefüllten Druckzylinder stehen mit einem Druckspeicher in Verbindung. Beim Absenken des Hubtisches 17 wird das Druckmedium in den Druckspeicher gedrückt ; während beim Anheben des Hubtisches 19 das Druckmedium über die Druckzylinder unterstützend auf die Hubbewegung einwirkt. Zum Aufbau und zum Aufrechterhalten des Druckmediums ist ein nicht dargestelltes Hydraulikaggregat vorgesehen, das ebenfalls elektrisch angetrieben wird, so daß für das Hubgestell 9 nur Strom zur Energieversorgung benötigt wird. In Verbindung mit dem Drucksystem sind an sich bekannte und deshalb nicht näher ausgeführte Einrichtungen vorgesehen, durch die sich das Druckniveau an verschiedene Gewichtsbelastungen des Hubtisches 19 anpassen läßt. Solche unterschiedlichen Gewichtsbelastungen ergeben sich beispielsweise, wenn auf den Hubtisch 19 verschieden schwere Unterwerkzeuge aufgesetzt werden.

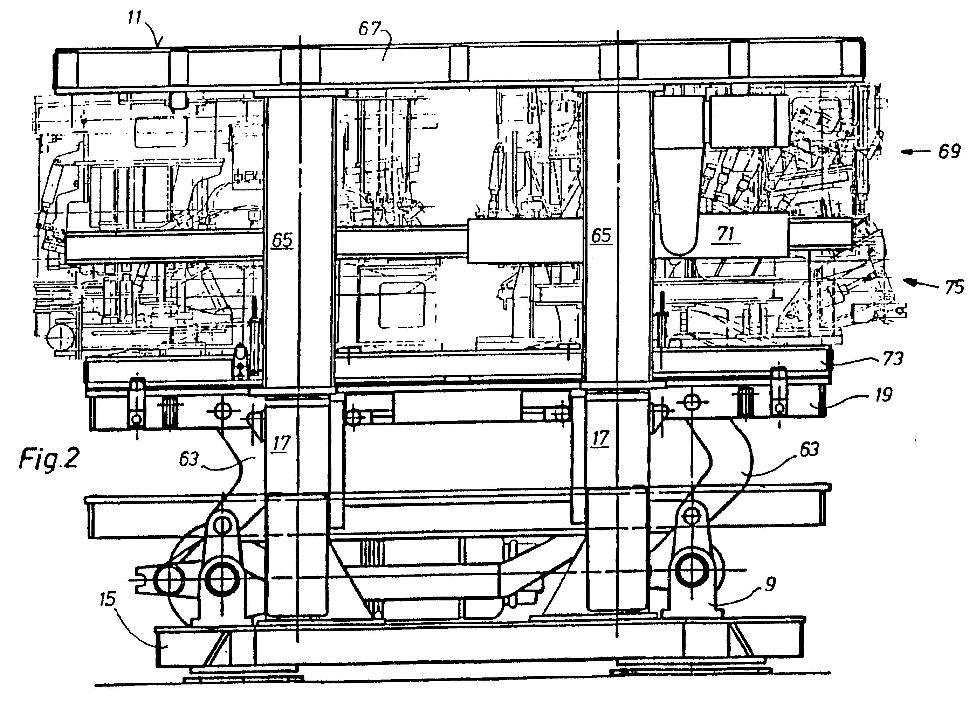

Aus den Figuren 1 und 2 ist das Werkzeuggestell 11 erkennbar, welches auf das Hubgestell 9 zur Vervollständigung der Vorrichtung aufgesetzt werden soll. Das Werkzeuggestell 11 umfaßt vier Säulen 65, welche in ihren Abständen und Anschlüssen an die Säulen 17 des Hubgestells 9 angepaßt sind. Die Säulen 65 sind durch eine Kopfplatte 67 miteinander verbunden. An der Kopfplatte 67 sind die meisten Werkzeuge (im vorliegenden Fall handelt es sich um Schweißwerkzeuge) befestigt. Sie werden deshalb nachfolgend als Oberwerkzeuge 69 bezeichnet. Während in Fig. 2 das Werkzeuggestell 11 mit den Oberwerkzeugen 69 dargestellt ist, zeigt Fig. 1 das Werkzeuggestell 11 zur Verdeutlichung der Konstruktion das Werkzeuggestell 11 ohne Werkzeuge.

An den Säulen 65 ist außerdem eine Fördervorrichtung 71 angebracht, durch welche das zu bearbeitende Werkstück in das Werkzeuggestell 11 einführbar und/oder herausbewegbar ist. An den Säulen 65 des Werkzeuggestelles 11 ist außerdem noch eine Grundplatte 73 lösbar befestigt. Diese Grundplatte 73 nimmt – wie aus Fig. 2 ersichtlich – Unterwerkzeuge 75 auf. Die Verbindung der Grundplatte 73 mit den Säulen 65 erfolgt über an den Säulen befestigte Hülsen 77 und Zapfen 79, welche an der Grundplatte 73 festgelegt sind. Die Hülsen 77 und die Zapfen 79 bilden nicht nur eine Verbindung zwischen beiden Bauteilen, sondern gleichzeitig eine Zentrierung, so daß eine genaue Zuordnung der Unterwerkzeuge 75 zu den Oberwerkzeugen 69 gegeben ist. Auf die genaue Funktion der Zentrierung und der Verbindung beider Bauteile wird nachfolgend bei der Beschreibung eines Werkzeugwechsels eingegangen.

Wie aus Fig. 1 unmittelbar ersichtlich, schließen sich an zwei Seiten des Hubgestells 9 Abstelleinrichtungen 13 für Werkzeugestelle 11 an. Über die Abstelleinrichtungen 13 ist es moglich, jeweils ein gerade nicht benötigtes Werkzeuggestell 11 auf Abruf bereitzustellen. Da jedes Werkzeuggestell zur Bearbeitung unterschiedlicher Werkzeuge oder zur Durchführung unterschiedlicher Arbeitsvorgänge verschiedene Werkzeuge und gegebenenfalls auch den unterschiedlichen zu bearbeitenden Werkstücken angepaßte Förderarme aufweist, ist es durch die Abstelleinrichtungrn 13 möglich, die gewünschten Einrichtungen durch Verschieben schnell in ihre Arbeitsposition über das Hubgestell 9 zu bringen.

Für diesen Zweck sind an der Oberseite jeder Abstelleinrichtung 13 Rollen (nicht dargestellt) vorgesehen, welche eine leichte Verschiebbarkeit sicherstellen. Desweiteren ist jede Abstelleinrichtung 13 mit einer Verschiebeeinheit 81 versehen. Die Verschiebeeinheit 81 wird durch einen Elektromotor 83 angetrieben. Zum Festlegen von nicht benötigten Werkzeuggestellen 11 auf der Abstelleinrichtung 13 ist diese mit einer Arretiervorrichtung 85 versehen.

Wie bereits vorstehend erwähnt, erfolgt eine Anpassung der Vorrichtung an unterschiedliche Werkstücke bzw. Bearbeitungsvorgänge nur durch Wegbewegen des nicht mehr benötigten Werkzeuggestells 11 auf eine Freiabstelleinrichtung 13 und einem Verschieben des nunmehr einzusetzenden Werkzeuggestelles 11 von der Abstelleinrichtung 13 über das Hubgestell 9. Nachfolgend wird ein solcher Werkzeugwechsel unter Bezugnahme auf die Figuren 1, 4a, 4b, 4c und 5 beschrieben, wobei davon ausgegangen wird, daß sich zunächst kein Werkzeuggestell 11 auf dem Hubgestell 9 befindet. Die Werkzeugestelle 11 sind demnach auf den Abstelleinrichtungen 13 untergebracht und dort fixiert.

Zunächst wird die Arretierung des gewünschten Werkzeuggestelles 11 durch Lösen der Arretiervorrichtung 85 (manuell oder automatisch) aufgehoben. Nun ist das Werkzeuggestell 11 in Richtung auf das Hubgestell 9 zu verschiebbar. Die Verschiebung selbst wird durch einen Mitnehmer 87 der Verschiebeeinheit 81 bewirkt.

Während dieser Operation befindet sich der Hubtisch 19 des Hubgestells 9 in einer angehobenen Stellung, in der seine obere Fläche die Zentrierbolzen 21 seiner Säulen 17 überragt. In dieser Stellung befindet sich die obere Fläche des Hubtisches 19 gleichzeitig in der Ebene, in der die untere Fläche der Grundplatte 73 des Werkzeuggestells 11 auf den Rollen der Abstelleinrichtung gleitet. Durch diese Abstimmung ist es möglich, daß die Grundplatte 73 des Werkzeuggestells 11 über die Zentrierbolzen 21 am Hubgestell 9 verschoben werden kann. Die Verschiebung erfolgt solange, bis die Zentrierbolzen 21 den zugeordneten Aufnahmen in den Säulen 65 des Werkzeuggestells 11 gegenüber stehen. In dieser Stellung liegt nur die Grundplatte 73 des Werkzeuggestells 11 auf dem Hubgestell 9, nämlich seinem Hubtisch 19, auf. Die dadurch freitragenden Säulen 65 des Werkzeuggestells 11 stehen über die Hülsen 77 und die Zapfen 79 an der Grundplatte 73.

Zur Kräfteübertragung von den Säulen 65 zur Grundplatte 73 über die Hülsen 77 und Zapfen 79 sind in jeder Hülse zwei übereinander angeordnete Bohrungen 89 und 91 ausgeführt. Diesen Bohrungen enspricht ein angepaßtes Langloch 93 in den Zapfen 79. In jede Bohrung 89 bzw. 91 der Hülsen 77 und durch die zugeordneten Langlöcher 93 in den Zapfen sind Steckbolzen 95 hindurchgeführt. Dabei sind die Langlöcher 93 im Bezug auf die Bohrungen 89 und 91 so abgestimmt, daß bei in beide Bohrungen eingeführten Steckbolzen 95 ein Längsspiel auftritt, das sich jeweils zur unbelasteten Richtung hin einstellt.

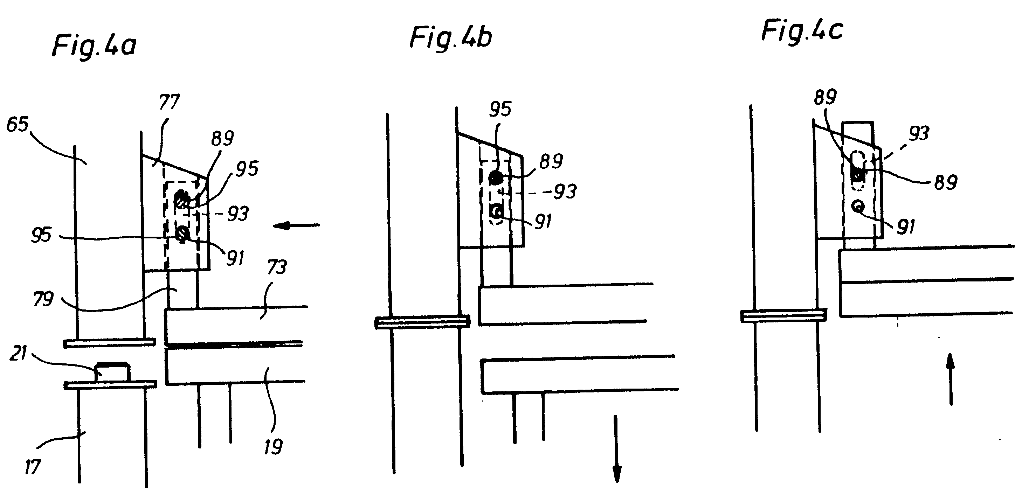

Da das gesamte Werkzeuggestell 11 zunächst nur über seine Grundplatte 73 auf dem Gestell 9 aufliegt, erfolgt die Übertragung der Gewichtskräfte von den Säulen auf die Grundplatte 73 über die in die unteren Bohrungen 91 eingeführten Steckbolzen 95. Dies wird unmittelbar aus Fig. 4a ersichtlich. Die in die oberen Bohrungen 89 eingeführten Steckbolzen 95 sind in diesem Zustand nicht belastet.

Als nächster Schritt erfolgt ein Absenken des Hubtisches 19. Dadurch gelangen die Säulen 65 des Werkzeuggestelles 11 in Anlage an die Säulen 17 des Hubgestells 9. Durch die Zentrierbolzen 21 wird eine exakte Zuordnung festgelegt. In dieser Stellung ist es nunmehr so, daß ausschließlich die Säulen 65 des Werkzeuggestells 11 auf dem Hubgestell 9 aufsetzen, während die Grundplatte 73 jetzt an den Säulen 65 hängt. Dies hat zur Folge, daß nunmehr alleinig die durch die oberen Bohrungen 89 geführten Steckbolzen eine Kraft übertragen. Die durch die unteren Bohrungen 91 geführten Steckbolzen werden gezogen (Fig. 4b).

Der nächste, in Fig. 4c dargestellte Schritt besteht darin, den Hubtisch 19 so weit anzuheben, daß auch die durch die obere Bohrung 89 geführten Steckbolzen 95 entlastet sind und gezogen werden können. Zuvor werben jedoch die Grundplatte 73 und der Hubtisch 19 durch Schnellverbinder 97 verbunden. Selbstverständlich ist auch, daß die Säulen 65 des Werkzeuggestells 11 nicht nur durch Schwerkraft über die Zentrierbolzen 21 auf dem Hubgestell 9 gehalten sind, sondern das auch hier Schnellverbinder 97 die Position sichern.

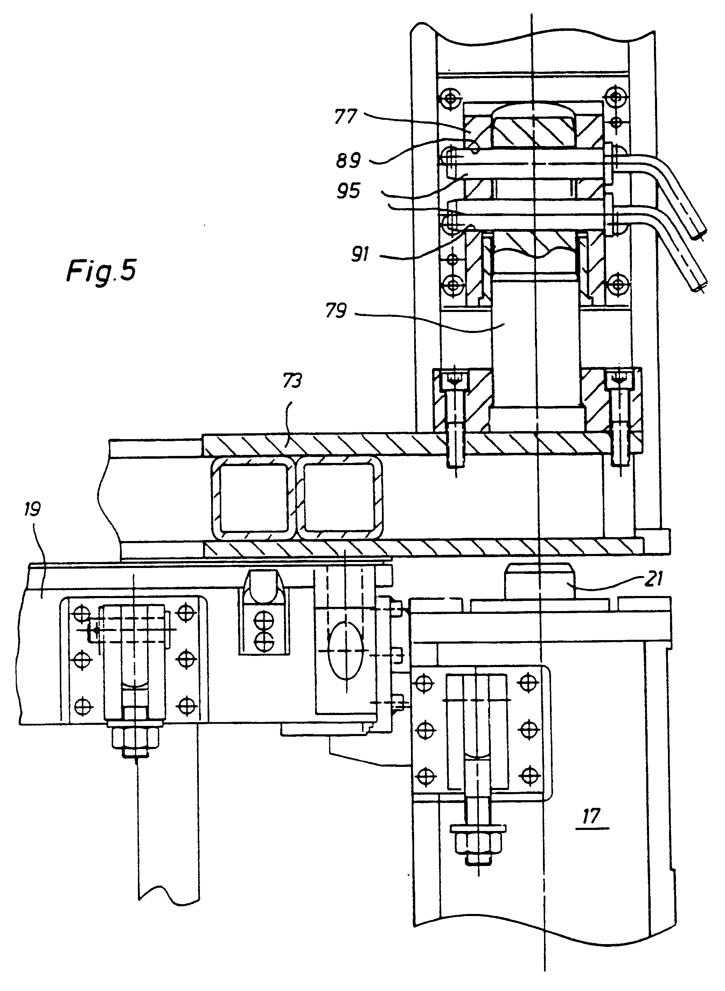

Fig. 5 zeigt als Einzelheit eine der Verbindungen zwischen der Grundplatte 93 und einer Säule 65 in Schnittdarstellung die in Fig. 5 dargestellte Stellung entspricht der Stellung gemäß Fig. 4a. Durch den Einsatz von zwei Bolzen wird nicht nur eine erhöhte Sicherheit gewährleistet, sondern auch die Möglichkeit geschaffen, das Werkzeuggestell in gleicher Weise mit dem Hubgestell zu verbinden, wenn das Werkzeuggestell nicht durch Verschiebung, sondern durch eine Hubeinrichtung ausgewechselt werden soll.

Durch die Zentrierung der Grundplatte 73 über die Zapfen 79 und die Hülsen 77 an den Säulen ist eine genaue Zuordnung der auf der Grundplatte aufgesetzten Unterwerkzeuge zu den Oberwerkzeugen sichergestellt, was insbesondere bei Schweißwerkzeugen für eine gute Punktqualität, Maßhaltigkeit und hohe Standzeiten der Elektroden wichtig ist. Die angesprochene Zentrierung zwischen Grundplatte 73 und dem übrigen Werkzeuggestell 11 erfolgt bei jeder Hubbewegung, nämlich dann, wenn der Hubtisch 19 in die obere Endstellung verfährt. Genau in dieser Stellung wird auch die exakte Zuordnung der Unterwerkzeuge zu den Oberwerkzeugen benötigt.

Das Entfernen des Werkzeuggestells 11 vom Hubgestell 9 erfolgt in an sich umgekehrter Reihenfolge wie vorstehend beschrieben. Dazu ist es erforderlich, daß zunächst alle Schnellverbinder 97 gelöst werden. Anschließend wird der Hubtisch 19 etwas hochgefahren, wodurch es möglich ist, Steckbolzen 97 in die oberen Bohrungen 89 einzuführen. Nun wird der Hubtisch 19 wieder abgesenkt, wodurch die Grundplatte 73 über die Absteckbolzen 95 in den oberen Bohrungen 89 an den Säulen 65 hängt. In dieser Stellung ist es möglich, auch die Absteckbolzen in die unteren Bohrungen 91 einzuführen. Schließlich wird mittels des Hubtisches 19 die Grundplatte mit dem Werkzeuggestell so weit angehoben, daß sie in einer Ebene durch die Verschiebeeinheit 81 auf die Abstelleinrichtung 13 gezogen und dort arretiert werden kann. Das Hubgestell 9 steht nunmehr zur Aufnahme eines zweiten, auf der anderen Abstelleinrichtung 13 bereitstehendes-Werkzeuggestell 11 zur Verfügung.

**Ansprüche**

1. Vorrichtung (7) zum Bearbeiten von Werkstücken, wobei ein das Werkstück aufnehmendes Unterwerkzeug (75) durch ein Hubgestell (9) nach oben gegen ein Oberwerkzeug (69) bewegbar ist und in dieser Position die Bearbeitung des Werkstückes erfolgt, gekennzeichnet durch folgende Merkmale :

a) die Vorrichtung (7) ist horizontal in ein Werkzeuggestell (11) und in ein Hubgestell (9) unterteilt,

b) das Werkzeuggestell (11) ist unter Zwischenschaltung einer Zentriereinrichtung (21) auf das Hubgestell (9) aufgesetzt,

c) das Werkzeuggestell (11) umfaßt senkrechte Säulen (65), eine diese verbindende Kopfplatte (67), eine Grundplatte (73) und eine Arretiervorrichtung (95) zum Fixieren der Grundplatte (73) an den Säulen (65) beim Wechsel des Werkzeuggestells (11),

d) die Grundplatte (73) trägt das Unterwerkzeug (75), während das Oberwerkzeug (69) an der Kopfplatte (67) und/oder an den Säulen (65) angebracht ist,

e) das Hubgestell (9) umfaßt einen absenkbaren Hubtisch (19) sowie Verbindungselemente (97) zum Verbinden des Hubtisches (19) mit der Grundplatte (73) des Werkzeuggestells (11).

2. Vorrichtung nach Anspruch 1, **dadurch gekennzeichnet,** daß am Werkzeuggestell (11) eine Fördervorrichtung (71) angebracht ist, durch welche das Werkstück in das Werkzeuggestell (11) einführbar und/oder herausbewegbar ist.

3. Vorrichtung nach Anspruch 1 oder 2, **dadurch gekennzeichnet,** daß sich an zwei Seiten des Hubgestells (9) Abstelleinrichtungen (13) für Werkzeuggestelle (11) anschließen.

4. Vorrichtung nach Anspruch 3, **dadurch gekennzeichnet,** daß jede Abstelleinrichtung (13) eine Verschiebeeinheit (81) aufweist, durch die Werkzeuggestelle (11) von dem Hubgestell (9) auf die Abstelleinrichtungen (13) und umgekehrt bewegbar sind.

5. Vorrichtung nach Anspruch 4, **dadurch gekennzeichnet,** daß die Abstelleinrichtungen (13) an ihrer Oberseite zum leichten Verschieben der Werkzeuggestelle (11) gehärtete Leisten, Rollen oder Kugeln tragen und eine Arretiervorrichtung (85) für abgestellte Werkzeuggestelle (11) aufweisen.

6. Vorrichtung nach einem der Ansprüche 1 bis 5, **dadurch gekennzeichnet,** daß der Hubtisch (19) durch einen Kurbeltrieb anhebbar und absenkbar ist.

7. Vorrichtung nach Anspruch 6, **dadurch gekennzeichnet,** daß der Kurbeltrieb von einer Motor-Getriebeeinheit (23) angetrieben wird, daß von dem Getriebe (27) Wellenabschnitte (29, 31) herausgeführt sind, welche erste Kurbelschwingen aufweisen, und daß an diesen angebrachte erste Kurbelzapfen (49) mit dem Hubtisch (19) verbundene Stützen (63) aufnehmen.

8. Vorrichtung nach Anspruch 7, **gekennzeichnet durch** folgende Merkmale :

a) das Hubgestell (9) umfaßt vier Wellenabschnitte (29, 31, 55, 57) mit je einer ersten Kurbelschwinge (41) und einer Stütze (63),

b) das Getriebe (27) treibt zwei einander gegenüberliegende Wellenabschnitte (29, 31) an,

c) die Bewegung der angetriebenen Wellenabschnitte (29, 31) wird auf die zwei nicht angetriebenen Wellenabschnitte (55, 57) übertragen,

d) zur Übertragung ist jeder Wellenabschnitt mit einer zweiten Kurbelschwinge (43) versehen,

e) je zwei zugeordnete zweite Kurbelschwingen (43) sind über an ihnen ausgebildete zweite Kurbelzapfen (49) und ein erstes Übertragungsglied (59) miteinander verbunden.

9. Vorrichtung nach Anspruch 8, **gekennzeichnet durch** folgende Merkmale :

a) jeder Wellenabschnitt (29, 31, 55, 57) trägt eine dritte Kurbelschwinge (45) mit einem dritten Kurbelzapfen (51),

b) die dritten Kurbelschwingen (45) schließen zu den zweiten Kurbelschwingen (43) einen Winkel von 90° ein,

c) die auf den beiden angetriebenen Wellenabschnitten (29, 31) befestigten dritten Kurbelschwingen (45) sind mit den auf den nicht angetriebenen Wellenabschnitten angeordneten dritten Kurbelschwingen (45) über zweite Übertragungsglieder (61) verbunden.

10. Vorrichtung nach Anspruch 8 oder 9, **dadurch gekennzeichnet,** daß die Kurbelschwingen (41, 43, 45) durch je zwei Schenkel (53) gebildet sind, welche über die Kurbelbolzen (47, 49, 51) miteinander verbunden sind, und daß benachbarte Kurbelschwingen einen Schenkel (53) gemeinsam benutzen.

11. Vorrichtung nach einem der Ansprüche 8 bis 10, **dadurch gekennzeichnet,** daß zumindest die beiden nicht direkt angetriebenen Wellenabschnitte (55, 57) jeweils unterbrochen und einseitig gelagert sind, derart, daß ein Übertragungsglied (59) ungehindert dazwischen hin durchtreten kann.

12. Vorrichtung nach einem der Ansprüche 7 bis 11, **dadurch gekennzeichnet,** daß zur Erzielung eines großen Schwenkwinkels der Kurbelschwingen (41, 43, 45) ein Teil oder alle Übertragungs glieder (59, 61) und/oder die am Hubtisch (19) angreifenden Stützen (63) gekröpft ausgebildet sind.

13. Vorrichtung nach einem der Ansprüche 7 bis 12, **dadurch gekennzeichnet,** daß jeder der beiden angetriebenen Wellenabschnitte (29, 31) in zwei Lagern (37, 39) aufgenommen ist, daß zwischen den Lagern (37, 39) die Kurbelschwingen (41, 43, 45) angeordnet sind, und daß der Wellenabschnitt (29, 31) zwischen der Motor-Getriebeeinheit (23) und dem anschließenden Lager (37) über Flansche (33, 35) trennbar ausgeführt ist.

14. Vorrichtung nach einem der Ansprüche 7 bis 13, **dadurch gekennzeichnet,** daß der Motor der Motor-Getriebeeinheit (23) ein Gleichstrommotor (25) ist, welcher über ein an einem Wellenabschnitt aufgesetztes Nockenschaltwerk ansteuerbar ist.

15. Vorrichtung nach einem der Ansprüche 1 bis 14, **dadurch gekennzeichnet,** daß der Hubtisch (19) an Säulen (17) des Hubgestells (9) geführt ist und mit Druckzylindern zusammenwirkt, welche das Gewicht des Tisches (19), der Grundplatte (73) und des Unterwerkzeuges (75) ausgleichen.

16. Vorrichtung nach Anspruch 15, **dadurch gekennzeichnet,** daß die Druckzylinder mit einem Druckspeicher in Verbindung stehen, derart, daß beim Absenken des Hubtisches (19) das Druckmedium in den Druckspeicher gelangt und beim Anheben des Hubtisches (19) das Druckmedium über die Druckzylinder unterstützend auf die Hubbewegung einwirkt.

17. Vorrichtung nach Anspruch 16, **dadurch gekennzeichnet,** daß als Druckmedium Hydraulikflüssigkeit dient, daß ein Hydraulikaggregat zum Aufbau und zur Aufrechterhaltung des Druckmediums vorgesehen ist, und daß das System Einrichtungen zum Anpassen des Druckniveaus an verschiedene Gewichtsbelastungen umfaßt.

18. Vorrichtung nach einem der Ansprüche 1 bis 17, **dadurch gekennzeichnet,** daß das Hubgestell (9) nach oben vorstehende Zentrierbolzen (21) zum Zusammenwirken mit den Säulen (65) des Werkzeuggestells (11) aufweist.

19. Vorrichtung nach einem der Ansprüche 1 bis 18, **gekennzeichnet durch** folgende Merkmale :

a) die Grundplatte (73) des Werkzeuggestells (11) ist an wenigstens zwei einander gegenüberliegenden Stellen mit den Säulen (65) des Werkzeuggestells (11) über Steckbolzen (95) verbunden,

b) zur Aufnahme der Steckbolzen (95) ist ein Bauteil (73) mit senkrechten Zapfen (79) versehen, welche dem Durchmesser der Steckbolzen (95) angepaßte Langloch-Bohrungen (93) aufweisen,

c) am anderen Bauteil (65) sin zur Aufnahme der Zapfen (79) Hülsen angebracht, welche mit den Langloch-Bohrungen (93) der Zapfen (79) fluchtende Bohrungen (89, 91) zum Hindurchführen der Steckbolzen (95) tragen.

20. Vorrichtung nach Anspruch 19, **dadurch gekennzeichnet,** daß jede Hülse (77) vertikal übereinander zwei Bohrungen (89, 91) zur Aufnahme von Steckbolzen (95) aufweist, daß jeder Zapfen (79) ein Langloch (93) von einer solchen Längserstreckung aufweist, daß bei in die beiden Bohrungen (89, 91) eingeführten und durch das Langloch (93) hindurchgestreckten Steckbolzen (95) ein Längsspiel auftritt.

21. Vorrichtung nach einem der Ansprüche 19 oder 20, **dadurch gekennzeichnet,** daß die Zapfen (79) und die Hülsen (77) in der oberen Stellung des Hubtisches (19) eine Zentrierung bilden.

## Revendications

1. Installation (7) pour l'usinage de pièces, dans laquelle un outillage inférieur (75) recevant la pièce est déplacé par un bâti élévateur (9) vers le haut contre un outillage supérieur (69) ; l'usinage de la pièce étant effectué dans cette position, caractérisée par les éléments suivants :

(a) l'installation (7) est divisée horizontalement en un bâti porte-outils (11) et un bâti élévateur (9),

(b) le bâti porte-outils (11) est fixé sur le bâti élévateur (9) par insertion d'un dispositif de centrage (21),

(c) le bâti porte-outils (11) comprend des colonnes verticales (65), une plaque supérieure (67) reliant celles-ci, une plaque de base (73) et un dispositif de blocage (95) pour fixer la plaque de base (73) aux colonnes (65) lors du changement de bâti porte-outils (11),

(d) la plaque de base (73) porte l'outillage inférieur (75) tandis que l'outillage supérieur (69) est fixé à la plaque supérieure (67) et/ou aux colonnes (65),

(e) le bâti élévateur (9) comprend une table élévatrice (19) abaissable ainsi que des éléments de raccord (97) pour relier la table élévatrice (19) à la plaque de base (73) du bâti porte-outils (11).

2. Installation suivant la revendication 1, caractérisée en ce qu'un dispositif convoyeur (71) est fixé au bâti porte-outils (11), permettant ainsi d'amener la pièce dans le bâti porte-outils (11) et/ou de l'en évacuer.

3. Installation suivant la revendication 1 ou 2, caractérisée en ce que des dispositifs de mise en réserve (13) pour les bâtis porte-outils (11) sont adjacents des deux côtés du bâti élévateur (9).

4. Installation suivant la revendication 3, caractérisée en ce que chaque dispositif de mise en réserve (13) comporte une unité de déplacement (81), par laquelle les bâtis porte-outils (11) peuvent être déplacés depuis le bâti élévateur (9) jusque sur les dispositifs de mise en réserve (13) et vice versa.

5. Installation suivant la revendication 4, caractérisée an ce que les dispositifs de mise en réserve (13) présentent à leur face supérieure, pour un déplacement aisé des bâtis porte-outils (11), des billes, des rouleaux ou des bandes trempées et un dispositif de blocage (85) pour les bâtis porte-outils (11) mis en réserve.

6. Installation suivant l'une des revendications 1 à 5, caractérisée en ce que la table élévatrice (19) est montée et baissée par un système à genouillère.

7. Installation suivant la revendication 6, caractérisée en ce que le système à genouillère est entraîné par une unité (23) moteur/jeu d'engrenages, en ce que sortent du jeu d'engrenages (27) des tronçons d'arbre (29, 31) qui présentent des premières manivelles, et en ce que de premiers tourillons de manivelle (49) fixés à celles-ci reçoivent des bras-supports (63) reliés à la table élévatrice (19).

8. Installation suivant la revendication 7, caractérisée par les éléments suivants :

(a) le bâti élévateur (9) comporte quatre tronçons d'arbre (29, 31, 55, 57) chacun avec une première manivelle (41) et un support (63),

(b) le jeu d'engrenages (27) entraîne deux tronçons d'arbre (29, 31) opposés,

(c) le mouvement des tronquons d'arbre (29, 31) entraînés est transmis aux deux tronçons d'arbre (55, 57) non entraînés,

(d) chaque tronçon d'arbre est muni d'une deuxième manivelle (49) pour la transmission,

(e) deux deuxièmes manivelles (43) sont reliées entre elles par l'intermédiaire d'un deuxième tourillon de manivelle (49) et d'un premier élément de transmission (59).

9. Installation suivant la revendication 8, caractérisée par les éléments suivants :

(a) chaque tronçon d'arbre (29, 31, 55, 57) porte une troisième manivelle (45) avec un troisième tourillon de manivelle (51),

(b) les troisièmes manivelles (45) font un angle de 90° par rapport aux deuxièmes manivelles (43),

(c) les troisièmes manivelles (45) fixées sur les deux tronçons d'arbre (29, 31) entraînés sont reliés aux troisièmes manivelles (45) placées sur les tronçons d'arbre non entraînés par l'intermédiaire de deuxièmes éléments de transmission (61).

10. Installation suivant la revendication 8 ou 9, caractérisée en ce que les manivelles (41, 43, 45) sont chacune formées par deux ailes (53) qui sont reliées entre elles par l'intermédiaire des tourillons de manivelle (47, 49, 51), et en ce que des manivelles voisines utilisent en commun une aile (53).

11. Installation suivant l'une des revendications 8 à 10, caractérisée en ce qu'au moins les deux tronçons d'arbre (55, 57) non directement entraînés sont chacun montés de manière discontinue et d'un côté de telle façon qu'un élément de transmission (59) puisse passer sans être gêné.

12. Installation suivant l'une des revendications 7 à 11, caractérisée en ce que pour obtenir un grand angle de pivotement des manivelles (41, 43, 45) une partie ou tous les éléments de transmission (59, 61) et/ou les supports (63) en prise avec la table élévatrice (19) sont coudés.

13. Installation suivant l'une des revendications 7 à 12, caractérisée en ce que chacun des deux tronçons d'arbre (29, 31) entraînés est logé dans deux paliers (37, 39), en ce que les manivelles (41, 43, 45) sont disposées entre les paliers (37, 39), et en ce que le tronçon d'arbre (29, 31) entre l'unité (23) moteur/jeu d'engrenages et le palier (37) qui lui est raccordé est monté de manière amovible par l'intermédiaire de brides (33, 35).

14. Installation suivant l'une des revendications 7 à 13, caractérisée en ce que le moteur de l'unité (23) moteur/jeu d'engrenages comprend un moteur à courant continu (25), qui est commandé par l'intermédiaire d'un mécanisme de commutation à cames monté sur un tronçon d'arbre.

15. Installation suivant l'une des revendications 1 à 14, caractérisée en ce que la table élévatrice (19) est guidée sur les colonnes (17) du bâti élévateur (9) et qu'elle coopère avec les cylindres de pression qui équilibrent le poids de la table (19) de la plaque de base (73) et de l'outillage inférieur (75).

16. Installation suivant la revendication 15, caractérisée en ce que les cylindres de pression sont reliés à un accumulateur de pression de telle manière que, lorsque de la descente de la table élévatrice (19) le moyen de pression arrive dans l'accumulateur de pression et que, lors de la montée de la table élévatrice (19) le moyen de pression agisse pour soutenir le mouvement de montée par l'intermédiaire des cylindres de pression.

17. Installation suivant la revendication 16, caractérisée en ce qu'un fluide hydraulique est utilisé comme moyen de pression, en ce qu'un groupe hydraulique est prévu pour la formation et le maintien du moyen de pression, et en ce que le système comprend des dispositifs pour adapter le niveau de pression à des charges diverses.

18. Installation suivant l'une des revendications 1 à 17, caractérisée en ce que le bâti élévateur (9) présente des boulons de centrage (21) dépassant vers le haut pour coopérer avec les colonnes (65) du bâti porte-outils (11).

19. Installation suivant l'une des revendications 1 à 18, caractérisée par les éléments suivants :

(a) la plaque de base (73) du bâti porte-outils (11) est reliée en au moins deux endroits en regard aux colonnes (65) du bâti porte-outils (11) par l'intermédiaire d'axes (95),

(b) un élément (73) avec tourillons verticaux (79) est prévu pour recevoir les aies (95), cet élément comportant des trous longitudinaux (93) adaptés au diamètre des aies (95),

(c) des douilles sont placées sur un autre élément (65) pour recevoir les tourillons (79), ces douilles comportant des alésages (89, 91) qui s'alignent sur les trous longitudinaux (93) des tourillons pour l'introduction des axes (95).

20. Installation suivant la revendication 19, caractérisée en ce que chaque douille (77) présente deux alésages (89, 91) situés verticalement l'un au-dessus de l'autre pour recevoir les axes (95), en ce que chaque tourillon (79) présente un trou longitudinal (93) d'une longueur telle que reste un jeu longitudinal lorsque les axes (95) ont été enfoncés dans les deux alésages (89, 91) et étendus dans le trou longitudinal (93).

21. Installation suivant l'une des revendications 19 ou 20, caractérisée en ce que les tourillons (79) et les douilles (77) constituent un centrage dans la position supérieure de la table élévatrice.

## Claims

1. Apparatus (7) for machining workpieces, wherein a lower tool (75) which receives the workpiece is upwardly movable towards an upper tool (69) by means of a lifting frame (9) and machining of the workpiece takes place in this position, characterised by having the following features :

a) the apparatus (7) is subdivided horizontally into a tool frame (11) and a lifting frame (9),

b) the tool frame (11) is placed on the lifting frame (9), with a centring device (21) interposed,

c) the tool frame (11) comprises vertical columns (65), a top plate (67) which connects the latter, a base plate (73) and a locking device (95) for locating the base plate (73) on the columns (65) when the tool frame (11) is changed,

d) the base plate (73) carries the lower tool (75), whilst the upper tool (69) is mounted on the top plate (67) and/or on the columns (65),

e) the lifting frame (9) comprises a lowerable lifting platform (19) and fasteners (97) for joining the lifting platform (19) to the base plate (73) of the tool frame (11).

2. Apparatus according to claim 1, characterised in that mounted on the tool frame (11) is a conveyor (71), by means of which the workpiece can be introduced into and/or withdrawn from the tool frame (11).

3. Apparatus according to claim 1 or 2, characterised in that two sides of the lifting frame (9) are adjoined by storage devices (13) for tool frames (11).

4. Apparatus according to claim 3, characterised in that each storage device (13) has a displacement unit (81) by means of which tool frames (11) can be moved from the lifting frame (9) onto the storage devices (13) and vice versa.

5. Apparatus according to claim 4, characterised in that on their upper face the storage devices (13) carry hardened gibs, rollers or balls for easy displacement of the tool frames (11) and have a locking device (85) for stored tool frames (11).

6. Apparatus according to one of claims 1 to 5, characterised in that the lifting platform (19) can be raised and lowered by means of a crank drive.

7. Apparatus according to claim 6, characterised in that the crank drive is powered by a motor transmission unit (23), that shaft sections (29, 31) having first crank arms run from the transmission (27), and that first crankpins (49) mounted on said crank arms receive brackets (63) joined to the lifting platform (19).

8. Apparatus according to claim 7, characterised by having the following features :

a) the lifting frame (9) comprises four shaft sections (29, 31, 55, 57), each with a first crank arm (41) and a bracket (63),

b) the transmission (27) drives two mutually opposed shaft sections (29, 31),

c) the movement of the driven shaft sections (29, 31) is transmitted to the two non-driven shaft sections (55, 57),

d) each shaft section is provided with a second crank arm (43) for transmission,

e) each pair of associated second crank arms (43) is joined together by means of second crankpins (49) formed thereon and a first transmission element (59).

9. Apparatus according to claim 8, characterised by having the following features :

a) each shaft section (29, 31, 55, 57.) carries a third crank arm (45) with a third crankpin (51),

c) the third crank arms (45) enclose an angle of 90° with the second crank arms (43),

d) the third crank arms (45) attached to the two driven shaft sections (29, 31) are joined via second transmission elements (61) to the third crank arms (45) mounted on the non-driven shaft sections.

10. Apparatus according to claim 8 or 9, characterised in that the crank arms (41, 43, 45) are each formed by two legs (53) which are joined together via the crank pins (47, 49, 51), and that adjacent crank arms utilise one leg (53) jointly.

11. Apparatus according to one of claims 8 to 10, characterised in that at least the two shaft sections that are not directly driven, (55, 57), are each discontinuous and mounted on one side, thereby allowing a transmission element (59) to pass freely between them.

12. Apparatus according to one of claims 7 to 11, characterised in that to attain a large swivel angle of the crank arms (41, 43, 45), some or all of the transmission elements (59, 61) and/or the brackets (63) engaging the lifting platform (19) are swan-necked.

13. Apparatus according to one of claims 7 to 12, characterised in that each of the two driven shaft sections (29, 31) is accommodated in two mountings (37, 39), that between the mountings (37, 39) are disposed the crank arms (41, 43, 45), and that the shaft section (29, 31) is designed to be separable via flanges (33, 35) between the motor transmission unit (23) and the adjoining mounting (37).

14. Apparatus according to one of claims 7 to 13, characterised in that the motor of the motor transmission unit (23) is a DC motor (25) operated via a cam mechanism positioned on a shaft section.

15. Apparatus according to one of claims 1 to 14, characterised in that the lifting platform (19) is set on columns (17) of the lifting frame (9) and cooperates with compression cylinders which compensate the weight of the platform (19), base plate (73) and lower tool (75).

16. Apparatus according to claim 15, characterised in that the compression cylinders communicate with an accumulator, such that when the lifting platform (19) is lowered, the pressure medium passes into the accumulator, and when the lifting platform (19) is raised, the pressure medium has a contributory action on the lifting movement via the compression cylinders.

17. Apparatus according to claim 16, characterised in that hydraulic fluid is used as the pressure medium, that a hydraulic assembly is provided to build up and maintain the pressure medium, and that the system comprises devices for adapting the pressure level to various weight loadings.

18. Apparatus according to one of claims 1 to 17, characterised in that the lifting frame (9) has upwardly projecting centring pins (21) for cooperating with the columns (65) of the tool frame (11).

19. Apparatus according to one of claims 1 to 18, characterised by having the following features :

a) the base plate (73) of the tool frame (11) is joined to the columns (65) of the tool frame (11) by means of socket pins (95) at not less than two mutually opposing points,

b) to accommodate the socket pins (95) there is provided one component (73) with vertical pins (79) which have slottype drilled holes (93) matching the diameter of the socket pins (95),

c) adapters are mounted on the other component (65) to accommodate the pins (79), said adapters presenting drilled holes (89, 91) flush with the slot-type drilled holes (93) of the pins (79) to allow the socket pins (95) to pass through them.

20. Apparatus according to claim 19, characterised in that each adapter (77) has two drilled holes (89, 91) vertically one above the other for accommodating socket pins (95), that each pin (79) has a slot (93) with a longitudinal extension such that longitudinal play is produced when socket pins (95) are inserted into the two drilled holes (89, 91) and pass through the slot (93).

21. Apparatus according to one of claims 19 or 20, characterised in that the pins (79) and adapters (77) form an alignment when the lifting platform (19) is in the upper position.

Fig.1

EP 0 296 151 B1

Fig.2

Fig.3

Fig.4a

Fig.4b

Fig.4c

EP 0 296 151 B1

Fig.5